# EUROPEAN PATENT APPLICATION

(11) **EP 4 310 751 A1**
(43) Date of publication of application: **24.01.2024**
(21) Application number: 23185201.3
(22) Date of filing: 13.07.2023
(51) Int. Cl.: G06Q 20/06, G07F 17/32

(54) **METHOD AND DEVICE FOR PROVIDING GAME CONTENT BY USING CRYPTOCURRENCY**

(30) Priority: 19.07.2022 KR 20220088953
(71) Applicant: Neople, Inc., Jeju-do 63091 (KR)
(72) Inventor: PARK, Jae Hwan, Seoul (KR)
(74) Representative: Murgitroyd & Company

(57) **Abstract**

Provided is a method of depositing a cryptocurrency in a game, the method including, based on an input from a first user for changing a state of the cryptocurrency, changing a state of a principal cryptocurrency owned by the first user to a first deposit state in which a first reward is generated as an interest income as the principal cryptocurrency is deposited, obtaining a winning condition for providing a second user with the generated interest income, and based on the obtained winning condition being satisfied by the second user under the first deposit state, providing the second user with the generated first reward, and keeping the principal cryptocurrency owned by the first user.

## Description

### CROSS-REFERENCE TO RELATED APPLICATION

This application is based on and claims priority under 35 U.S.C. §119 to Korean Patent Application No. 10-2022-0088953, filed on July 19, 2022, in the Korean Intellectual Property Office, the disclosure of which is incorporated by reference herein in its entirety.

### BACKGROUND

### 1. Field

The disclosure relates to a method and device for providing game content by using cryptocurrency.

### 2. Description of the Related Art

With the development of computing devices and network environments, the number of users who enjoy online games by using various wired and wireless communication devices has greatly increased. Online games arouse users' interest in the games by providing characters directly controlled by the users and items for the characters.

The use of a technique called staking on a cryptocurrency, which is one of such in-game goods, enables an interest income by simply depositing the cryptocurrency. Staking refers to holding a certain amount of a cryptocurrency as a stake such that a cryptocurrency owned by a user is used for the operation of a blockchain network and the user receives a certain amount of the cryptocurrency as an interest on the cryptocurrency. However, there is a disadvantage in that the user cannot trade the deposited cryptocurrency when the user wants to.

### SUMMARY

Provided is a method of providing a variety of content to users to realize profits, by providing a staking-related process in combination with game content.

Additional aspects will be set forth in part in the description which follows and, in part, will be apparent from the description, or may be learned by practice of the presented embodiments of the disclosure.

According to an aspect of the disclosure, a method of depositing a cryptocurrency in a game includes, based on an input from a first user for changing a state of the cryptocurrency, changing a state of a principal cryptocurrency owned by the first user to a first deposit state in which a first reward is generated as an interest income as the principal cryptocurrency is deposited, obtaining a winning condition for providing a second user with the generated interest income, and based on the obtained winning condition being satisfied by the second user under the first deposit state, providing the second user with the generated first reward, and keeping the principal cryptocurrency owned by the first user.

According to an embodiment, the cryptocurrency may include a non-fungible token.

According to an embodiment, the method may further include, based on an input from the first user for changing the state of the cryptocurrency, changing the state of the principal cryptocurrency owned by the first user to a second deposit state in which a second reward is generated as an interest income as the principal cryptocurrency is deposited, and based on the obtained winning condition being satisfied by the second user under the second deposit state, providing the second user with the generated second reward and the principal cryptocurrency.

According to an embodiment, the first reward and the second reward may be of the same type of cryptocurrency as the principal cryptocurrency, and the amount of the second reward may be greater than the amount of the first reward.

According to an embodiment, the method may further include, based on an input from the first user for changing the state of the cryptocurrency, changing the state of the cryptocurrency owned by the first user to a third deposit state in which a third reward is generated as an interest income as the principal cryptocurrency is deposited, and under the third deposit state, providing the first user with the generated third reward.

According to an embodiment, the first reward and the third reward may be of the same type of cryptocurrency as the principal cryptocurrency, and the amount of the third reward may be less than the amount of the first reward.

According to an embodiment, the method may further include, based on an input from the first user for changing the state of the cryptocurrency, changing the state of the principal cryptocurrency owned by the first user to a tradable state in which the principal cryptocurrency is tradable with the second user, under the tradable state, receiving a trade request for the principal cryptocurrency according to an input from the first user, and based on the trade request, providing the second user from the first user with at least a part of the principal cryptocurrency.

According to an embodiment, the first reward may be of the same type of cryptocurrency as the principal cryptocurrency, and the amount of the first reward may be proportional to the amount of the principal cryptocurrency.

According to an embodiment, the amount of the first reward may be proportional to a period in which the principal cryptocurrency is deposited.

According to an embodiment, the changing of the state of the principal cryptocurrency to the second deposit state may include changing a state of a part of the principal cryptocurrency to the second deposit state, and the method further may include, based on the obtained winning condition being satisfied by the second user under the first deposit state and the second deposit state, providing the second user with the generated first reward, the generated second reward, and the part of the principal cryptocurrency, and keeping a remaining part of the principal cryptocurrency owned by the first user.

According to an embodiment, the method may further include, based on the obtained winning condition being not satisfied by the second user under the first deposit state, providing the first user with the generated first reward, and keeping the principal cryptocurrency owned by the first user.

According to an embodiment, the changing of the state of the principal cryptocurrency to the first deposit state may include receiving, from the first user, a deposit request for depositing the principal cryptocurrency, and transmitting, to a blockchain network, a deposit transaction for depositing the principal cryptocurrency, and the providing of the first reward and the keeping of the principal cryptocurrency owned by the first user may include transmitting, to the blockchain network, a withdrawal transaction for withdrawing the first reward as the interest income generated as the principal cryptocurrency is deposited, and providing the second user with the withdrawn first reward.

According to another aspect of the disclosure, a game providing device for providing a system for depositing a cryptocurrency in a game includes a memory storing instructions, and at least one processor functionally connected to the memory, wherein the at least one processor is configured to execute the instructions to, based on an input from a first user for changing a state of the cryptocurrency, change a state of a principal cryptocurrency owned by the first user to a first deposit state in which a first reward is generated as an interest income as the principal cryptocurrency is deposited, obtain a winning condition for providing a second user with the generated interest income, and based on the obtained winning condition being satisfied by the second user under the first deposit state, provide the second user with the generated first reward, and keep the principal cryptocurrency owned by the first user.

According to an embodiment, the cryptocurrency may include a non-fungible token.

According to an embodiment, the at least one processor may be further configured to execute the instructions to, based on an input from the first user for changing the state of the cryptocurrency, change the state of the principal cryptocurrency owned by the first user to a second deposit state in which a second reward is generated as an interest income as the principal cryptocurrency is deposited, and based on the obtained winning condition being satisfied by the second user under the second deposit state, provide the second user with the generated second reward and the principal cryptocurrency.

According to an embodiment, the first reward and the second reward may be of the same type of cryptocurrency as the principal cryptocurrency, and the amount of the second reward may be greater than the amount of the first reward.

According to an embodiment, the at least one processor may be further configured to execute the instructions to, based on an input from the first user for changing the state of the cryptocurrency, change the state of the cryptocurrency owned by the first user to a third deposit state in which a third reward is generated as an interest income as the principal cryptocurrency is deposited, and under the third deposit state, provide the first user with the generated third reward.

According to an embodiment, the first reward and the third reward may be of the same type of cryptocurrency as the principal cryptocurrency, and the amount of the third reward may be less than the amount of the first reward.

According to an embodiment, the at least one processor may be further configured to execute the instructions to, based on an input from the first user for changing the state of the cryptocurrency, change the state of the principal cryptocurrency owned by the first user to a tradable state in which the principal cryptocurrency is tradable with the second user, under the tradable state, receive a trade request for the principal cryptocurrency according to an input from the first user, and based on the trade request, provide the second user with at least a part of the principal cryptocurrency from the first user.

According to an embodiment, the first reward may be of the same type of cryptocurrency as the principal cryptocurrency, and the amount of the first reward may be proportional to the amount of the principal cryptocurrency.

According to an embodiment, the amount of the first reward may be proportional to a period in which the principal cryptocurrency is deposited.

According to an embodiment, the at least one processor may be further configured to execute the instructions to change a state of a part of the principal cryptocurrency to the second deposit state, and based on the obtained winning condition being satisfied by the second user under the first deposit state and the second deposit state, provide the second user with the generated first reward, the generated second reward, and the part of the principal cryptocurrency, and keep a remaining part of the principal cryptocurrency owned by the first user.

According to an embodiment, the at least one processor may be further configured to execute the instructions to, based on the obtained winning condition being not satisfied by the second user under the first deposit state, provide the first user with the generated first reward, and keep the principal cryptocurrency owned by the first user.

According to an embodiment, the at least one processor may be further configured to execute the instructions to receive, from the first user, a deposit request for depositing the principal cryptocurrency, transmit, to a blockchain network, a deposit transaction for depositing the principal cryptocurrency, transmit, to the blockchain network, a withdrawal transaction for withdrawing the first reward as the interest income generated as the principal cryptocurrency is deposited, and provide the second user with the withdrawn first reward.

According to another aspect of the disclosure, a server for providing a system for depositing a cryptocurrency in a game includes a memory storing instructions, and at least one processor functionally connected to the memory and configured to execute the instructions to, based on an input from a first user for changing a state of the cryptocurrency, change a state of a principal cryptocurrency owned by the first user to a first deposit state in which a first reward is generated as an interest income as the principal cryptocurrency is deposited, obtain a winning condition for providing a second user with the generated interest income, and based on the obtained winning condition being satisfied by the second user under the first deposit state, provide the second user with the generated first reward, and keep the principal cryptocurrency owned by the first user.

According to another aspect of the disclosure, a user terminal for using game content includes a user input unit configured to receive a user input, a memory storing instructions, and at least one processor functionally connected to the user input unit and the memory and configured to execute the instructions to, based on an input from a first user for changing a state of a cryptocurrency, change a state of a principal cryptocurrency owned by the first user to a first deposit state in which a first reward is generated as an interest income as the principal cryptocurrency is deposited, obtain a winning condition for providing a second user with the generated interest income, and based on the obtained winning condition being satisfied by the second user under the first deposit state, provide the second user with the generated first reward, and keep the principal cryptocurrency owned by the first user.

According to another aspect of the disclosure, a computer-readable recording medium has recorded thereon a program for causing a computer to execute a method of providing a cryptocurrency deposit system, the method including, based on an input from a first user for changing a state of a cryptocurrency, changing a state of a principal cryptocurrency owned by the first user to a first deposit state in which a first reward is generated as an interest income as the principal cryptocurrency is deposited, obtaining a winning condition for providing a second user with the generated interest income, and based on the obtained winning condition being satisfied by the second user under the first deposit state, providing the second user with the generated first reward, and keeping the principal cryptocurrency owned by the first user.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 illustrates a game providing system including a server and a user terminal, according to various embodiments;
FIGS. 2 and 3 are conceptual diagrams for describing an operation of providing game content, according to an embodiment;
FIGS. 4 and 5 are flowcharts for describing a method of providing game content, according to an embodiment;
FIGS. 6 to 8 are diagrams for describing an interface for changing the state of a principal cryptocurrency, according to an embodiment;
FIG. 9 is a conceptual diagram for describing an operation of providing game content, according to various embodiments;
FIG. 10 is a flowchart for describing a method of providing game content, according to an embodiment;
FIG. 11 is a diagram for describing an interface for changing the state of a principal cryptocurrency, according to an embodiment;
FIG. 12 is a flowchart for describing a method of providing game content, according to an embodiment;
FIG. 13 is a diagram for describing an interface for changing the state of a principal cryptocurrency, according to an embodiment;
FIG. 14 is a flowchart for describing a method of providing game content, according to an embodiment;
FIG. 15 is a flowchart for describing a method of providing game content, according to an embodiment;
FIG. 16 is a diagram for describing a detailed configuration of a game providing device according to various embodiments;
FIG. 17 is a diagram for describing a detailed configuration of a server according to various embodiments; and
FIG. 18 is a diagram for describing a detailed configuration of a user terminal according to various embodiments.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

Hereinafter, embodiments will be described in detail with reference to the accompanying drawings. In addition, a method of configuring and using an electronic device according to an embodiment will be described in detail with reference to the accompanying drawings. Like reference numerals in the drawings indicate parts or components that perform substantially the same functions.

Terms such as "first" or "second" may be used to describe various elements, but the elements are not limited by the terms. These terms are only used to distinguish one element from another element. For example, a first element may be referred to as a second element, and a second element may be referred to as a first element in a similar manner, without departing from the scope of the disclosure. The term "and/or" includes any and all combinations of one or more of the associated listed items.

Terms used herein are for describing embodiments and are not intended to limit the scope of the disclosure. A singular expression also includes the plural meaning as long as it is not inconsistent with the context. As used herein, terms such as "comprises," "includes," or "has" specify the presence of stated features, numbers, stages, operations, components, parts, or a combination thereof, but do not preclude the presence or addition of one or more other features, numbers, stages, operations, components, parts, or a combination thereof.

Throughout the specification, when a part is referred to as being "connected to" another part, it may be "directly connected to" the other part or be "electrically connected to" the other part through an intervening element. In addition, when an element is referred to as "including" a component, the element may additionally include other components rather than excluding other components as long as there is no particular opposing recitation. In addition, as used herein, the terms such as "...er (or)", "... unit", "... module", etc., denote a unit that performs at least one function or operation, which may be implemented as hardware or software or a combination thereof.

In the disclosure, a game providing device may be a game server, a user terminal, a game system including a game server and a user terminal, or an independent device.

In the disclosure, that a server controls a user terminal may mean that the server provides, through communication with the user terminal, output for the user terminal (all output devices in the user terminal, such as screen display, sound output, vibration output, lamp emission, etc.) and data for the user terminal to perform a certain operation. The user terminal may also control output from the user terminal by using pre-stored data, and the disclosure is not limited to the above example.

In the disclosure, that information or data is transmitted or received to or from a user (or an account of the user) may mean that the information or data is transmitted or received to or from a device (or a user terminal) corresponding to or linked to the user (or the account of the user).

In the disclosure, the terms "user", "player", "user account", and "gamer" may be used in the same meaning. It should be understood that, in the disclosure, a user terminal may refer to a user, a player, a user account, a gamer, or a device used thereby, depending on the context. It should be understood that in the disclosure, a user, a player, a user account, or a gamer may refer to an avatar or a character controlled thereby, or a device used thereby, depending on the context.

In the disclosure, a blockchain network may be a network using blockchain technology. The blockchain technology may refer to data forgery prevention technology based on distributed computing technology. In detail, the blockchain technology may refer to a peer-to-peer (P2P)-based technology of storing data to be managed, in a distributed data storage environment called 'block' in which pieces of low-volume data are connected to each other in the form of a chain, thereby preventing anyone from arbitrarily (i.e., without authority) modifying the stored data and allowing anyone to view results of modification.

All pieces of data that have been propagated to users before the block is discovered are recorded in the block, and are transmitted equally to all of the users in a P2P manner. Thus, the user cannot arbitrarily modify or omit the data. The block has a link to the date of discovery and the previous block, and a set of such blocks may be referred to as a blockchain. That is, the blockchain technology is to make numerous records into a bundle.

A block is a unit for storing data and is divided into a body and a header. The body may contain transaction details, and the header may contain cryptographic code such as a Merkle hash (a Merkle root) or a nonce (an arbitrary number related to encryption). For example, a block may be generated in a cycle of about 10 minutes.

A block may be generated by collecting transaction records and verifying reliability, and the generated block may be connected to a previous block to form a blockchain. As another example, in the specification, arbitrary data propagated over the blockchain may be accumulated in a certain amount to form block data, and the formed block data may be verified by nodes in the blockchain and then connected to previous block data.

Transaction records of a blockchain are not stored in and managed by a centralized server, but individual servers participating in transactions may gather to maintain and manage a network. Such individual servers, i.e., participants, are called nodes. In the disclosure, a game providing device, a user terminal, or a server may correspond to one of nodes.

Because there is no central manager, the role of nodes distributing a block is important in a blockchain network, and a new block is generated only when there is agreement from more than half of the participating nodes. The nodes store the blockchain in their computers, and even in a case in which some nodes are hacked and the content therein is altered, the data remains in the majority of the nodes, and thus, the data may be continuously preserved.

In addition, in the disclosure, arbitrary pieces of data propagated to a blockchain are stored in blockchain-participating nodes, and it is possible to verify whether the data is forged or altered by periodically/non-periodically comparing the data of the participating nodes with each other.

In the disclosure, a game object may refer to a virtual object present in a game space. For example, game objects may include a user's character (e.g., an avatar), a user's item, and the like, but are not limited thereto, and may refer to all objects implemented in a game space, such as a background or a terrain.

In the disclosure, a character may refer to a certain object that is controllable by a user in a game.

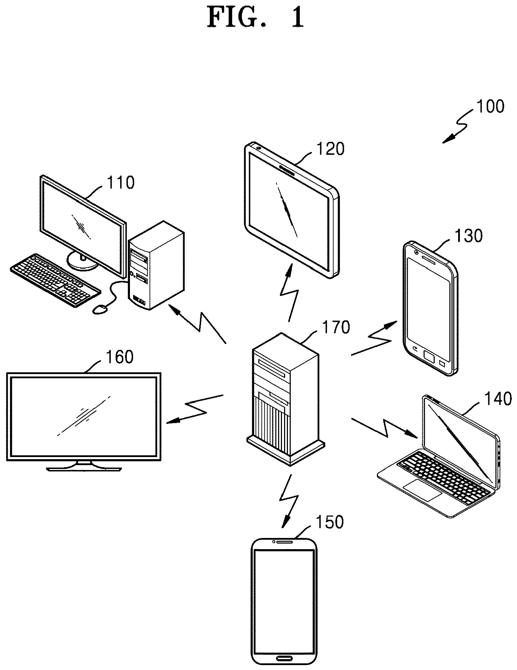

FIG. 1 illustrates a game providing system including a server and a user terminal, according to various embodiments.

A game providing system 100 of the disclosure may include a server 170 and one or more user terminals 110 to 160. The server 170 may provide various online activities through a network. The server 170 may simultaneously provide online activities to the one or more user terminals 110 to 160.

According to an embodiment, the server 170 may include a single server, a collection of servers, a cloud server, and the like, but is not limited thereto. The server 170 may provide various online activities and may include a database storing data for the online activities. Also, the server 170 may include a payment server for generating and processing a payment event. As described above, the server 170 may be a game providing device.

According to an embodiment, the network may refer to a connection established (or generated) by using any communication scheme, and may refer to a communication network established through any communication scheme to enable transmission and reception of data between terminals or between a terminal and a server.

'Any communication scheme' may encompass all communication schemes such as communication through a certain communication standard, a certain frequency band, a certain protocol, or a certain channel. For example, it may include Bluetooth, Bluetooth Low Energy (BLE), Wi-Fi, Zigbee, Third Generation (3G), Long-Term Evolution (LTE), communication schemes using ultrasonic waves, and the like, and may include short-range communication, long-range communication, wireless communication, and wired communication. The disclosure is not limited to the above examples.

According to an embodiment, a short-range communication scheme may refer to a communication scheme in which communication is available only when a device (a terminal or a server) performing the communication is within a certain range, and may include, for example, Bluetooth, near-field communication (NFC), and the like. A long-range communication scheme may refer to a communication scheme in which a device performing communication may perform the communication regardless of distance. For example, the long-range communication scheme may refer to a scheme in which two devices performing communication through a repeater such as an access point (AP) may communicate with each other even when they are far away from each other more than a certain distance, and may include a cellular network (e.g., 3G or LTE), such as Short Message Service (SMS) or phone calls. The disclosure is not limited to the above examples. Being provided with online activities by using a network may mean that communication between a server and a terminal may be performed through any communication scheme.

Throughout the specification, the one or more user terminals 110 to 160 may include a personal computer 110, a tablet 120, a cellular phone 130, a notebook computer 140, a smart phone 150, and a television (TV) 160, as well as a personal digital assistant (PDA), a portable multimedia player (PMP), a navigation device, an MP3 player, a digital camera, a refrigerator, a washing machine, a vacuum cleaner, and the like, but are not limited to the above examples. As described above, the one or more user terminals 110 to 160 may be game providing devices.

According to an embodiment, the online activities may include an online game, a portal service, and a social network service (SNS), but are not limited thereto. In addition, the online games may include various genres such as sports, massively multiplayer online role-playing game (MMORPG), Aeon of Strife (AOS), first-person shooter (FPS), trading card game (TCG), or collectible card game (CCG). In addition, the online game may be a game of competition between users, or may be a game of competition between a user and a computer (e.g., artificial intelligence). Also, the online game may be a game of construction or decoration rather than competition. The online game is not limited to the above examples, and there is no limitation to the form of the online game.

According to various embodiments, the one or more user terminals 110 to 160 and the game server 170 may communicate with a blockchain network. The blockchain network may be a network using blockchain technology. The blockchain network may be entirely hardware, or partly hardware and partly software, and may consist of one or more servers or computers, terminals, etc.

According to various embodiments, the game providing system 100 may receive an input from a first user for changing the state of a cryptocurrency. The game providing system 100 may change the state of a principal cryptocurrency owned by the first user to a first deposit state, based on the input from the first user. The first deposit state may refer to a state in which a first reward is generated as an interest income as the principal cryptocurrency is deposited. The game providing system 100 may obtain a winning condition for providing the second user with the generated interest income. When the second user satisfies the winning condition under the first deposit state, the game providing system 100 may provide the second user with the first reward and keep the principal cryptocurrency owned by the first user.

In an embodiment, some or all of the operations of the server 170 may be performed by the user terminals 110 to 160. For example, a method of depositing a cryptocurrency in a game according to various embodiments may be performed by the user terminals 110 to 160 without communication with the server 170.

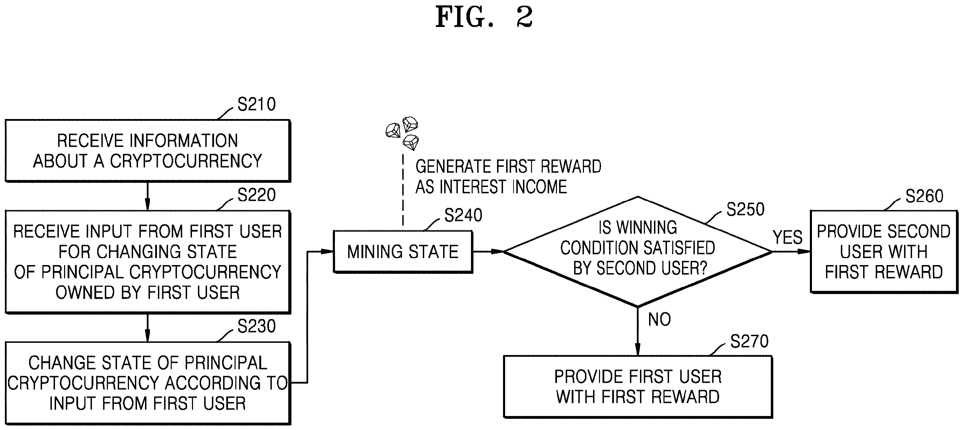

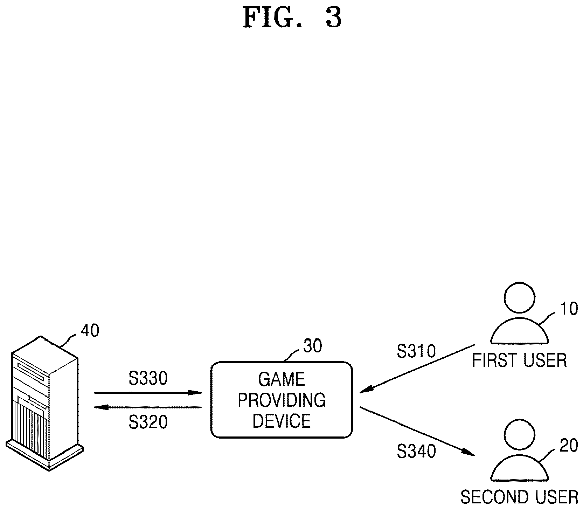

FIGS. 2 and 3 are conceptual diagrams for describing an operation of providing game content, according to an embodiment.

FIG. 2 illustrates a method of providing a user with a reward as an interest income as a principal cryptocurrency is deposited. In operation S210, a game providing device may receive information about a cryptocurrency.

The game providing device may receive the information about the cryptocurrency from a blockchain network through a communication unit. The blockchain network may be a network using blockchain technology, and redundant descriptions thereof will be omitted.

The cryptocurrency may be a digital currency generated by using cryptography based on a blockchain. In an embodiment, the cryptocurrency may include a non-fungible token, but this is only an example, and the type of the cryptocurrency does not limit the technical spirit of the disclosure.

The information about the cryptocurrency may include, for example, information about the type of the cryptocurrency, the amount of the cryptocurrency, and the state of the cryptocurrency.

In operation S220, the game providing device may receive an input from a first user for changing the state of a principal cryptocurrency.

In the disclosure, the principal cryptocurrency may refer to a cryptocurrency owned by a user. The principal cryptocurrency may refer to the principal amount of a cryptocurrency that may be deposited by the user's selection. For example, the principal cryptocurrency may refer to a cryptocurrency owned by the first user.

In operation S230, the game providing device may change the state of the principal cryptocurrency according to the input from the first user.

The state of the principal cryptocurrency may be designated according to the input from the first user. The state of the principal cryptocurrency may include at least a mining state.

The mining state may refer to a state in which an interest income is generated as a cryptocurrency is deposited. Under the mining state, a first reward may be generated as an interest income. Under the mining state, the user may obtain or lose the first reward through game content with another user. However, even when the first reward is lost, the principal cryptocurrency owned by the first user may be preserved.

For example, the game providing device may receive a user input for changing the state of a cryptocurrency owned by the first user to the mining state. Under the mining state, the first reward may be generated as an interest income based on the deposited cryptocurrency. The first user may obtain or lose the first reward through game content with a second user. When a winning condition that is arbitrarily set in the game content is satisfied by the second user, the game providing device may provide the second user with the first reward. On the contrary, when the winning condition that is arbitrarily set in the game content is not satisfied by the second user, the game providing device may provide the first user with the first reward.

In operation S240, the game providing device may change the state of the cryptocurrency to the mining state according to the input from the first user. Under the mining state, the game providing device may generate the first reward as an interest income as the principal cryptocurrency is deposited.

When the principal cryptocurrency is deposited in the mining state, the first reward may be generated as an interest income. The game providing device may generate a first reward as an interest income, or may receive information about a generated first reward from a blockchain network. However, the technical spirit of the disclosure is not limited thereto.

In operation S250, the game providing device may check whether a winning condition for the first user is satisfied by the second user. The game providing device may obtain a winning condition for providing the second user with the interest income generated from the principal cryptocurrency of the first user.

In operation S260, when the winning condition for the first user is satisfied by the second user under the mining state, the game providing device may provide the second user with the first reward. The first reward may be an interest income generated as the first user deposits a cryptocurrency based on the mining state. The first reward may be an interest income generated based on the principal cryptocurrency owned by the first user.

The game providing device may keep the principal cryptocurrency that is deposited in the mining state by the first user, owned by the first user.

In operation S270, when the winning condition is not satisfied by the second user under the mining state, the game providing device may provide the first user with the first reward. That is, the interest income generated as the first user deposits the cryptocurrency based on the mining state may be provided to the first user.

However, the technical spirit of the disclosure is not limited to provision of a reward when a winning condition is not satisfied. Although not illustrated, when the winning condition is not satisfied by the second user under the mining state, the game providing device may maintain continuous generation of an interest income as the principal cryptocurrency is deposited. In addition, the game providing device may not provide a particular user with the interest income.

For reference, roles of a plurality of entities in a system for providing game content according to an embodiment will be described with reference to FIG. 3.

Referring to FIG. 3, a game providing device 30 may provide a game service to a plurality of users 10 and 20. In addition, the game providing device 30 may receive and transmit information and signals related to a cryptocurrency from and to a blockchain network 40.

In operation S310, the game providing device 30 may receive a user input from the first user 10. The game providing device 30 may receive, from the first user 10, a deposit request for depositing a principal cryptocurrency. Here, the principal cryptocurrency may be a cryptocurrency owned by the first user 10.

In operation S320, the game providing device 30 may transmit, to the blockchain network 40, a deposit transaction for depositing the principal cryptocurrency. The deposit transaction may be a transaction related to at least one of a plurality of states for depositing the principal cryptocurrency according to an embodiment.

For example, the deposit transaction may include a transaction related to changing the state of the principal cryptocurrency to at least one of a mining state, an exposure state, and a staking state for depositing the principal cryptocurrency. Descriptions provided above with reference to FIG. 2 are applicable to the mining state, the exposure state, and the staking state, and thus, redundant descriptions will be omitted.

In addition, in operation S320, the game providing device 30 may transmit a withdrawal transaction for withdrawing an interest income generated as the principal cryptocurrency is deposited in the blockchain network 40.

For example, the game providing device 30 may transmit a withdrawal transaction for withdrawing a first reward generated as an interest income as a cryptocurrency is deposited in the blockchain network 40 based on the mining state.

As another example, the game providing device 30 may transmit a withdrawal transaction for withdrawing a second reward generated as an interest income as a cryptocurrency is deposited in the blockchain network 40 based on the exposure state.

As another example, the game providing device 30 may transmit a withdrawal transaction for withdrawing a third reward generated as an interest income as a cryptocurrency is deposited in the blockchain network 40 based on the staking state.

In operation S330, the game providing device 30 may receive, from the blockchain network 40, information according to a change in the state of the cryptocurrency.

For example, the game providing device 30 may receive information confirming that the principal cryptocurrency is deposited according to the transmitted deposit transaction. As another example, the game providing device 30 may receive information confirming that the principal cryptocurrency is withdrawn according to the transmitted withdrawal transaction.

In operation S340, the game providing device 30 may provide the second user 20 with the withdrawn first reward. When a winning condition for the game content is satisfied by the second user 20, the game providing device 30 may provide the second user 20 with the first reward.

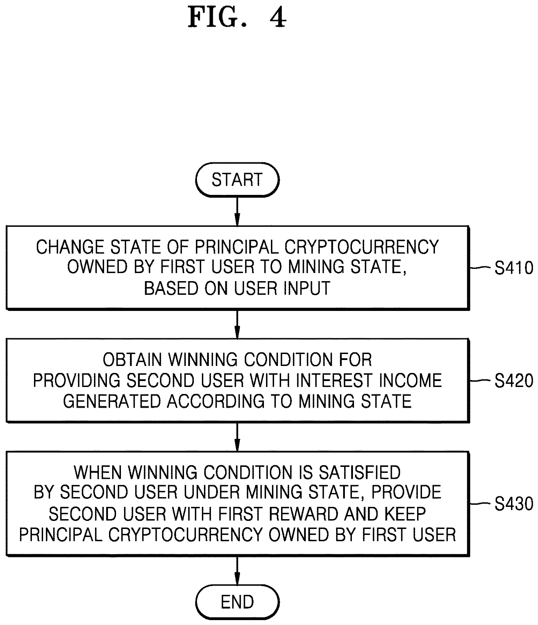

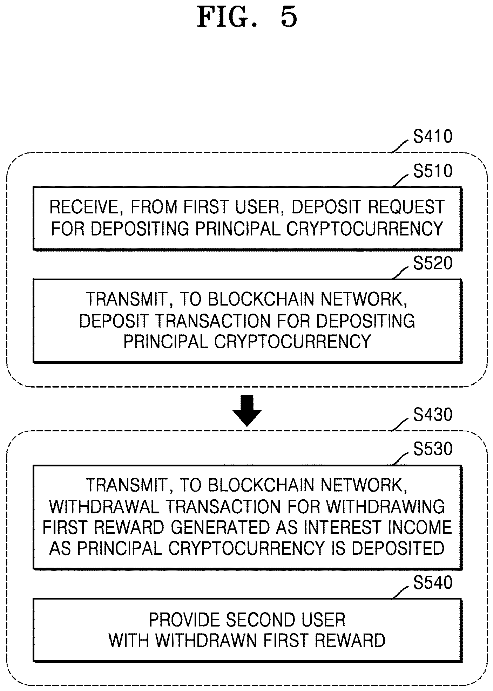

FIGS. 4 and 5 are flowcharts for describing a method of providing game content, according to an embodiment. For convenience of description, descriptions provided above with reference to FIGS. 2 and 3 will be briefly provided or omitted.

For reference, FIG. 4 is a diagram for describing a method of depositing a cryptocurrency based on a mining state.

Referring to FIG. 4, in operation S410, the game providing device may change the state of a principal cryptocurrency owned by a first user to a mining state, based on a user input.

The game providing device may receive an input from the first user. Based on the input from the first user, the game providing device may change the state of the principal cryptocurrency owned by the first user. The state of the principal cryptocurrency may include at least one of a mining state, an exposure state, a staking state, and a tradable state. For reference, descriptions with reference to FIGS. 4 and 5 will focus on changing the state of the principal cryptocurrency to the mining state.

The mining state may refer to a state in which an interest income is generated as a cryptocurrency is deposited. Under the mining state, a first reward may be generated as an interest income. The first user may obtain or lose the first reward through game content with a second user. Under the mining state, the principal cryptocurrency owned by the first user may kept owned by the first user.

The first reward may be of the same type of cryptocurrency as the principal cryptocurrency. The amount of the first reward may be proportional to the amount of the principal cryptocurrency. The amount of the first reward may be proportional to the period in which the principal cryptocurrency is deposited.

The game providing device may generate the first reward as an interest income according to the mining state. The game providing device may provide the second user or the first user with the first reward, according to whether a winning condition is satisfied by the second user.

In operation S420, the game providing device may obtain a winning condition for providing the second user with the interest income generated according to the mining state.

A winning condition for game content may vary depending on the type of a game provided. For a game in which a winner and loser are definitely determined from among the first user and the second user, for example, a fighting game, a sports game, or an FPS game, the winning condition may require that one user defeat the other user. When the second user wins, the game providing device may provide the second user with the first reward generated as the first owner deposits the principal cryptocurrency in the mining state.

As another example, in a fighting game, a real-time strategy (RTS), or the like, a winning condition may require one user to win, but the winning condition may require that one user inflict damage on the other user. When the second user inflicts damage on the first user, the game providing device may provide the second user with the first reward generated as the first owner deposits the principal cryptocurrency in the mining state.

In addition, the game providing device may determine the amount of the first reward to be provided to the second user, according to the degree of damage. When the degree of damage is 100 %, the game providing device may provide the second user with the entirety of the generated first reward. When the degree of damage is 50%, the game providing device may provide the second user with 50 % of the generated first reward.

As a specific example, when the second user destroys all objects of the first user within a time limit in a strategy game, or when the second user puts the first user out of action in a fighting game within a time limit, the game providing device may provide the second user with the entirety of the generated first reward.

As another example, when the second user destroys 50 % of objects of the first user within a time limit in a strategy game, or when the second user depletes 50 % of health of the first user within a time limit in a fighting game, the game providing device may provide the second user with 50 % of the generated first reward.

However, the type of game, the winning condition according to the type of game, the amount of the first reward to be provided, and the like are only examples, and the technical spirit of the disclosure is not limited thereto.

In operation S430, when the winning condition is satisfied by the second user under the mining state, the game providing device may provide the second user with the first reward, and keep the principal cryptocurrency owned by the first user.

When the winning condition is satisfied by the second user, the game providing device may provide the second user with the first reward generated as the principal cryptocurrency owned by the first user is deposited in the mining state.

On the contrary, when the winning condition is not satisfied by the second user, the game providing device may not provide the second user with the first reward. For example, when the winning condition is not satisfied by the second user, the game providing device may provide the first user with the first reward. As another example, when the winning condition is not satisfied by the second user, the game providing device may not provide the first reward to anyone. The game providing device may maintain continuous generation of the first reward as the principal cryptocurrency of the first user is maintained in the mining state.

Regardless of the winning condition, the game providing device may keep the principal cryptocurrency owned by the first user. That is, under the mining state, the principal cryptocurrency owned by the first user cannot be obtained by the second user. Under the mining state, all users other than the first user owning the principal cryptocurrency cannot access the principal cryptocurrency.

Referring to FIG. 5, operation S410 of FIG. 4 may include operations S510 and S520. Operation S430 of FIG. 4 may include operations S530 and S540.

In operation S510, the game providing device may receive, from the first user, a deposit request for depositing the principal cryptocurrency. In an embodiment, the deposit request may include at least one of information about a state in which the cryptocurrency is to be deposited, and information about the principal cryptocurrency to be deposited.

In an embodiment, the game providing device may obtain the first reward as an interest income as the principal cryptocurrency is deposited in the mining state. The game providing device may display the obtainable first reward as an expected income rate through a display.

In operation S520, the game providing device may transmit, to the blockchain network, a deposit transaction for depositing the principal cryptocurrency. In an embodiment, the deposit transaction may be transmitted by executing a smart contract. In an embodiment, the smart contract may include preset conditions such as the type and amount of cryptocurrency to be deposited, a deposit period, an interest rate, a target profit, and whether a premature withdrawal is possible.

In operation S530, the game providing device may transmit, to the blockchain network, a withdrawal transaction for withdrawing the first reward. The first reward may be an interest income generated as the principal cryptocurrency is deposited. The first reward may be an interest income generated based on the principal cryptocurrency owned by the first user.

In an embodiment, the withdrawal transaction may be transmitted by executing a smart contract. For example, the withdrawal transaction may be transmitted as a withdrawal condition set in the smart contract is satisfied.

In operation S540, the game providing device may provide the second user with the withdrawn first reward. When a winning condition related to game content is satisfied by the second user, the game providing device may provide the second user with the first reward.

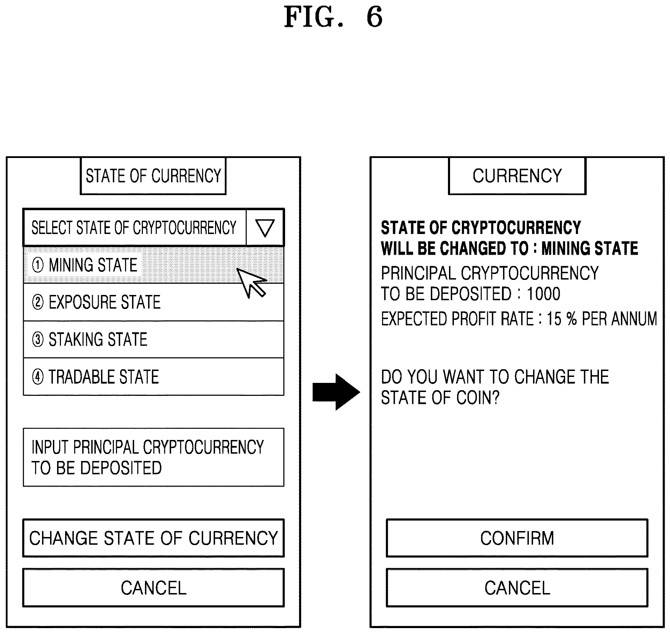

FIGS. 6 to 8 are diagrams for describing an interface for changing the state of a principal cryptocurrency, according to an embodiment.

FIG. 6 illustrates an example of an interface for changing the state of a cryptocurrency and determining the amount of the cryptocurrency to be deposited according to the changed state. The cryptocurrency deposit interface is not limited to the example of FIG. 6, and more or fewer components than those illustrated in FIG. 6 may be included in the cryptocurrency deposit interface.

Referring to FIG. 6, the game providing device may display an interface for changing the state of a cryptocurrency through a display. In an embodiment, a cryptocurrency deposit interface displayed on a user terminal may include the example of FIG. 6.

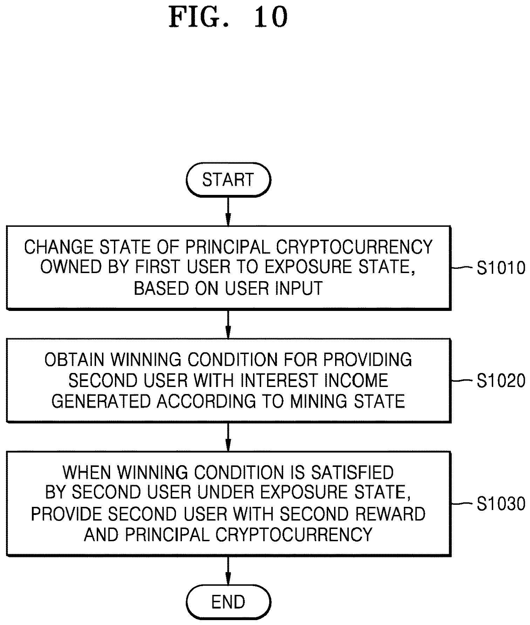

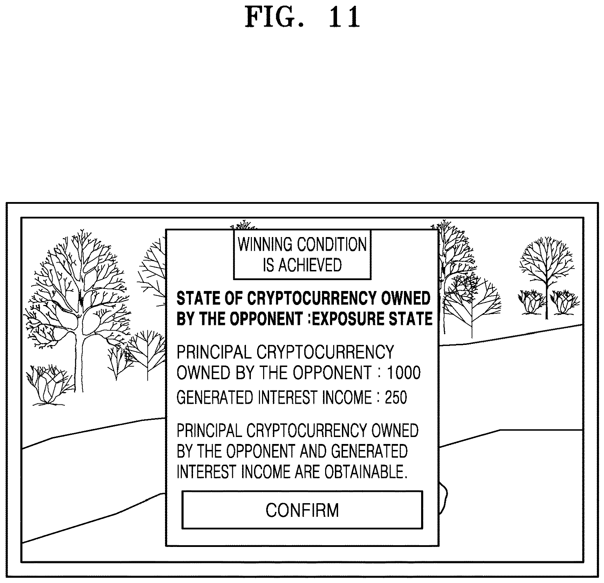

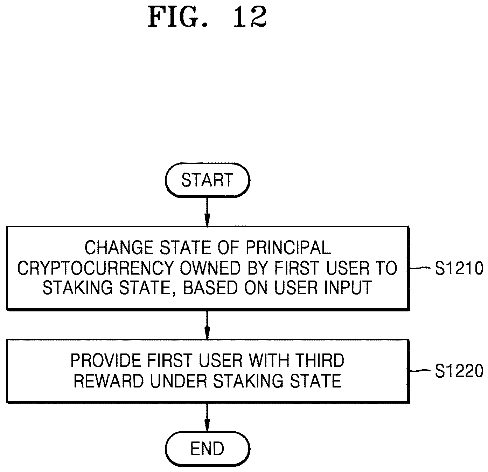

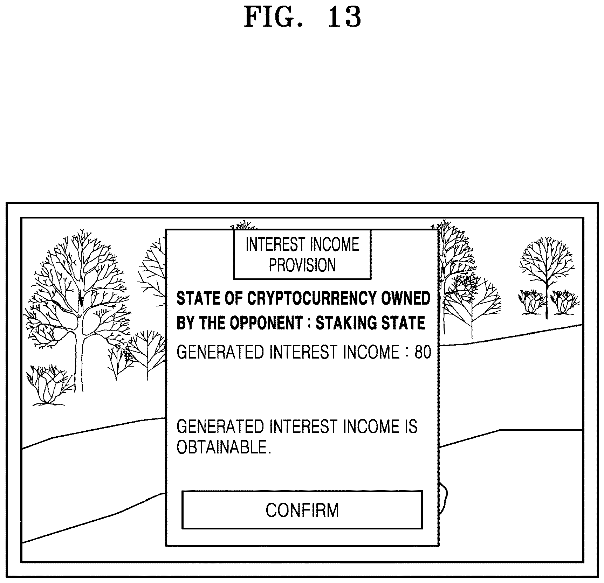

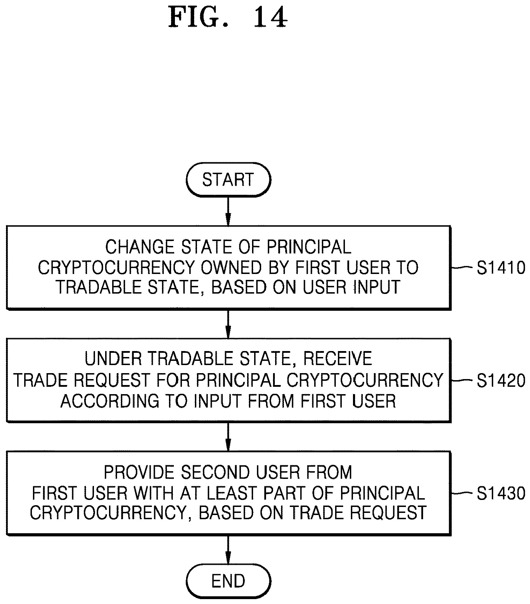

In an embodiment, the cryptocurrency deposit interface may include an interface for selecting a deposit method. The cryptocurrency deposit interface may include an interface for selecting a state to which the cryptocurrency may be changed. For example, the cryptocurrency deposit interface may include an interface for selecting any one of the mining state described above with reference to FIG. 6, the exposure state described above with reference to FIGS. 10 and 11, the staking state described above with reference to FIGS. 12 and 13, and the tradable state described above with reference to FIG. 14. The game providing device may obtain information about the state of the cryptocurrency to be changed, by receiving a user input through the cryptocurrency deposit interface.

In an embodiment, the cryptocurrency deposit interface may include an interface for inputting the amount of the cryptocurrency to be deposited, according to the method of depositing the cryptocurrency. The game providing device may obtain information about the deposit amount by receiving a user input through the cryptocurrency deposit interface.

In an embodiment, the cryptocurrency deposit interface may display information about the changed state of the cryptocurrency input by the user, information about the amount of the deposited principal cryptocurrency, and information about an expected interest income rate according to the deposit state of the cryptocurrency. The cryptocurrency deposit interface may display more or fewer pieces of information.

According to an embodiment, the cryptocurrency deposit interface may include an interface for receiving a user input for transmitting a deposit request. Based on receiving the user input, the user terminal may transmit, to a server, a deposit request for depositing the principal cryptocurrency according to information input by the user to the cryptocurrency deposit interface.

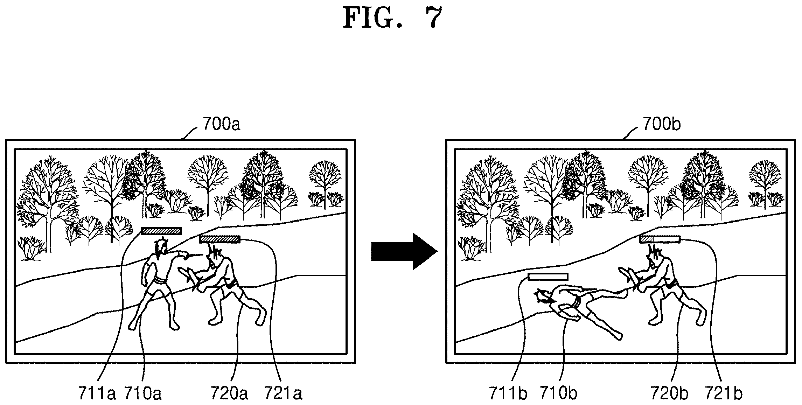

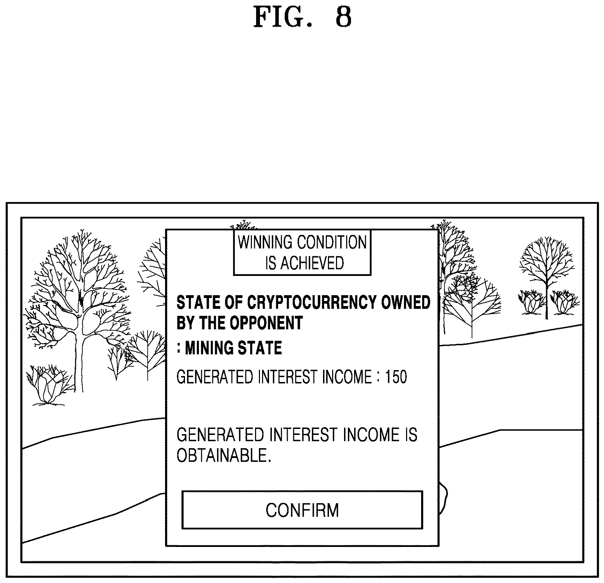

For reference, FIGS. 7 and 8 illustrate an interface for providing a first reward when a winning condition is satisfied by a second user after the state of a cryptocurrency is changed to the mining state.

For convenience of description, a fighting game in which a winner and loser are definitely determined is described as an example, but the type of game is only an example, and the technical spirit of the disclosure is not limited thereto.

Referring to FIG. 7, the game providing device displays game content through a display. For reference, the game providing device provides the game content with image frames including a first frame 700a and a second frame 700b. The first frame 700a and the second frame 700b are only image frames at particular moments, and the second frame 700b refers to a frame subsequent in time to the first frame 700a.

In an embodiment, the game providing device may provide the game content in which a first user 710a and a second user 720a compete with each other, through the first frame 700a. The game content is described as an example of content related to a fighting game, but the type of game content is only an example, and the technical spirit of the disclosure is not limited thereto.

The first user 710a may refer to an in-game character controlled by a first user. The second user 720a may refer to an in-game character controlled by a second user. The game providing device may display a first health interface 711a on the first user 710a and a second health interface 721a on the second user 720a, in the first frame 700a.

The game providing device may display the remaining health of the first user 710a through the first health interface 711a. The game providing device may display the remaining health of the second user 720a through the second health interface 721a. The game content provided through the game providing device may be content in which a player wins by depleting the entire health of an opponent. For example, the second user 720a may satisfy a winning condition by depleting the entire health of the first user 710a.

For reference, the second frame 700b may be a frame displaying a situation in which the entire health of a first user 710b is depleted. As the first user 710b and the second user 720b use fighting content, the game providing device may display a situation in which the entire health of the first user 710b is depleted, through the display.

The game providing device may display the remaining health of the first user 710b through a first health interface 711b. The game providing device may display the remaining health of a second user 720b through a second health interface 721b. In addition, the game providing device may display that the entire health of the first user 710b is depleted, through the first health interface 711b. That is, the second user 720b may satisfy the winning condition by depleting the entire health of the first user 710b.

Referring to FIG. 8, when the winning condition is satisfied, the game providing device may display a winning condition achievement interface.

In an embodiment, the winning condition achievement interface may display information about the state of an obtainable principal cryptocurrency owned by an opponent, and an obtainable generated interest income. The winning condition achievement interface may include more or fewer components than those illustrated in FIG. 8.

Although FIG. 8 illustrates that the state of the principal cryptocurrency owned by the opponent is one state, that is, the mining state, in an embodiment, the state of the principal cryptocurrency owned by the opponent may include a plurality of states. For example, the state of a part of the principal cryptocurrency owned by the opponent may be the mining state, and the state of the other part of the principal cryptocurrency owned by the opponent may be the exposure state. The game providing device may display information about the plurality of states of the principal cryptocurrency owned by the opponent, and respective interest incomes generated according to the plurality of states.

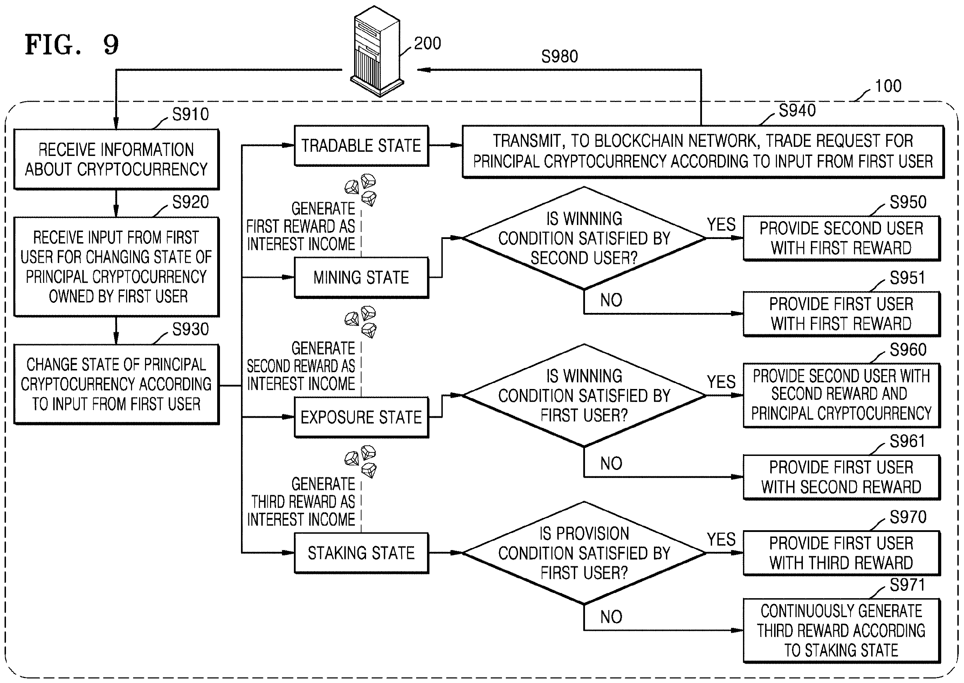

FIG. 9 is a conceptual diagram for describing an operation of providing game content, according to various embodiments.

For convenience of description, descriptions provided above with reference to FIG. 2 will be briefly provided or omitted.

FIG. 9 illustrates a method of providing a user with a reward as an interest income as a principal cryptocurrency is deposited. In operation S910, the game providing system 100 may receive information about a cryptocurrency from the blockchain network 200. The blockchain network may be a network using blockchain technology, and redundant descriptions thereof will be omitted.

The game providing system 100 may receive information about the type of the cryptocurrency, the amount of the cryptocurrency owned, the current state of the cryptocurrency, and the like. Here, the cryptocurrency may include a non-fungible token.

In operation S920, the game providing system 100 may receive an input from a first user for changing the state of a principal cryptocurrency. The description of operation S920 is the same as the description provided above with reference to operation S220 of FIG. 2, and thus, redundant descriptions will be omitted.

In operation S930, the game providing system 100 may change the state of the principal cryptocurrency according to the input from the first user.

The state of the principal cryptocurrency may be selected according to the input from the first user, and may include the mining state, the exposure state, the staking state, and the tradable state. For convenience of description, the description related to the mining state is provided above with reference to FIG. 2, and thus, the exposure state, the staking state, and the tradable state will be mainly described below.

The exposure state may refer to a state in which an interest income is generated as a cryptocurrency is deposited. Under the exposure state, a second reward may be generated as an interest income. Under the exposure state, a user may obtain or lose the second reward through game content with another user, and furthermore, may lose the deposited principal cryptocurrency.

For example, the game providing device may receive a user input for changing the state of a cryptocurrency owned by the first user to the exposure state. Under the exposure state, the second reward may be generated as an interest income based on the deposited cryptocurrency. Under the exposure state, the first user may obtain or lose the second reward through game content with a second user. In addition, the first user may lose the deposited principal cryptocurrency through the game content with the second user. When a winning condition arbitrarily set in the game content is satisfied by the second user, the game providing device may provide the second user with the second reward and the principal cryptocurrency. On the contrary, when the winning condition arbitrarily set in the game content is not satisfied by the second user, the game providing device may provide the first user with the second reward and keep the principal cryptocurrency owned by the first user.

The staking state may refer to a state in which an interest income is generated as a cryptocurrency is deposited. Under the staking state, a third reward may be generated as an interest income. Under the staking state, the game providing device may generate the third reward as an interest income. Under the staking state, other users may not have access to the principal cryptocurrency owned by the user and the third reward.

For example, the game providing device may receive a user input for changing the state of a cryptocurrency owned by the first user to the staking state. Under the staking state, the third reward may be generated as an interest income based on the deposited cryptocurrency. Under the staking state, the first user may obtain the third reward as an interest income according to the amount and period of the deposited cryptocurrency. The game providing device may disallow the second user from accessing the deposited principal cryptocurrency owned by the first user and the third reward. That is, the second user cannot obtain the deposited principal cryptocurrency owned by the first user and the third reward.

The tradable state may refer to a state in which the deposit of the cryptocurrency is released by locking the cryptocurrency. Under the tradable state, interest incomes may not be generated. Under the tradable state, the game providing device may provide a system for trading the principal cryptocurrency locked by the first user with another user, for example, the second user. That is, the first user may receive goods equivalent to the selling price of locked principal cryptocurrency from the second user in return for providing the principal cryptocurrency to the second user. Here, the goods may include in-game goods used in a game, or real goods, but this is only an example and the technical spirit of the disclosure is not limited thereto.

In operation S940, when the state of the cryptocurrency is changed to the tradable state, the user is able to freely trade the cryptocurrency. The game providing device may receive a trade request for the principal cryptocurrency according to an input from the first user. Although not illustrated, the game providing system 100 may receive the trade request through a separate interface. In operation S940, the game providing system 100 may transmit a trade request transaction to the blockchain network 200 based on the trade request.

When the state of the cryptocurrency is changed to the tradable state, interest incomes on the principal cryptocurrency may not be generated. As the state of the cryptocurrency is changed to the tradable state, users may freely trade the cryptocurrency with other users.

When the state of the principal cryptocurrency is the mining state, the game providing system 100 may check whether a winning condition for the first user is satisfied by the second user. For reference, the description related to the mining state is provided above with reference to FIG. 2, and thus will be briefly provided.

In operation S950, when the winning condition is satisfied by the second user under the mining state, the game providing system 100 may provide the second user with the first reward. Under the mining state, the game providing system 100 may keep the principal cryptocurrency that is deposited in the mining state by the first user, owned by the first user.

In operation S951, when the winning condition is not satisfied by the second user under the mining state, the game providing system 100 may provide the first user with the first reward.

When the state of the principal cryptocurrency is the exposure state, the game providing system 100 may check whether the winning condition for the first user is satisfied by the second user. In operation S960, when the winning condition is satisfied by the second user under the exposure state, the game providing system 100 may provide the second user with the second reward and the principal cryptocurrency.

The second reward may be an interest income generated as the first user deposits a cryptocurrency based on the exposure state. The second reward may be an interest income generated based on the principal cryptocurrency owned by the first user.

The principal cryptocurrency to be provided may refer to a principal cryptocurrency owned by the first user. The principal cryptocurrency to be provided may refer to a cryptocurrency deposited based on the exposure state.

In operation S961, when the winning condition is not satisfied by the second user under the exposure state, the game providing system 100 may provide the first user with the second reward. That is, the interest income generated as the first user deposits the cryptocurrency based on the exposure state may be provided to the first user.

However, the technical spirit of the disclosure is not limited to provision of a reward when a winning condition is not satisfied. Although not illustrated, when the winning condition is not satisfied by the second user under the exposure state, the game providing system 100 may maintain continuous generation of an interest income as the principal cryptocurrency is deposited. In addition, the game providing system 100 may not provide a particular user with the interest income.

When the state of the principal cryptocurrency is the staking state, the game providing system 100 may check whether a provision condition is satisfied by the first user. In operation S970, when the provision condition is satisfied by the first user under the staking state, the game providing system 100 may provide the first user with the third reward.

The provision conditions may be arbitrarily set. For example, the game providing system 100 may receive a provision request for obtaining an interest income according to an input from the first user. The provision condition may refer to reception of the provision request. This is only an example, and the technical spirit of the disclosure is not limited thereto.

The third reward to be provided may be an interest income generated as the first user deposits a cryptocurrency based on the staking state. The third reward may be an interest income generated based on the principal cryptocurrency owned by the first user.

The principal cryptocurrency may refer to a principal cryptocurrency owned by the first user. The principal cryptocurrency may refer to a cryptocurrency deposited based on the staking state.

In operation S971, when the provision condition is not satisfied by the first user under the staking state, the game providing system 100 may continuously generate the third reward according to the staking state. The game providing system 100 may not provide the first user with the third reward. That is, when the provision condition is not satisfied, the game providing system 100 may not provide the first user with the third reward, and maintain continuous generation of the third reward as an interest income.

FIG. 10 is a flowchart for describing a method of providing game content, according to an embodiment.

For reference, FIG. 10 is a diagram for describing a method of depositing a cryptocurrency based on the exposure state.

Referring to FIG. 10, in operation S1010, the game providing device may change the state of a principal cryptocurrency owned by a first user to the exposure state, based on a user input.

The game providing device may receive an input from the first user. Based on the input from the first user, the game providing device may change the state of the principal cryptocurrency owned by the first user. The state of the principal cryptocurrency may include at least one of the mining state, the exposure state, the staking state, and the tradable state. For reference, descriptions with reference to FIG. 10 will focus on changing the state of the principal cryptocurrency to the exposure state.

The exposure state may refer to a state in which an interest income is generated as a cryptocurrency is deposited. Under the exposure state, a second reward may be generated as an interest income. Under the exposure state, the first user may obtain or lose the second reward and the principal cryptocurrency through game content with a second user.

The game providing device may provide the second user or the first user with the second reward, according to whether a winning condition is satisfied by the second user.

In operation S1020, the game providing device may obtain a winning condition for providing the second user with the interest income generated according to the exposure state.

A winning condition for game content may vary depending on the type of a game provided. The description and a specific example of the winning condition are the same as those provided above with reference to FIG. 4, and thus, redundant descriptions will be omitted.

In operation S1030, when the winning condition is satisfied by the second user under the exposure state, the game providing device may provide the second user with the second reward and the principal cryptocurrency. The principal cryptocurrency may refer to an amount deposited in the exposure state among the cryptocurrency owned by the first user. The second reward may be an interest income generated as the principal cryptocurrency owned by the first user is deposited in the exposure state. Under the exposure state, the second user has access to the principal cryptocurrency owned by the first user. That is, when the second user satisfies the winning condition under the exposure state, the game providing device may provide the second user with the principal cryptocurrency owned by the first user as well as the second reward.

On the contrary, when the winning condition is not satisfied by the second user under the exposure state, the game providing device may not provide the second user with the second reward. For example, when the winning condition is not satisfied by the second user under the exposure state, the game providing device may provide the first user with the second reward. As another example, when the winning condition is not satisfied by the second user, the game providing device may not provide the second reward to anyone. The game providing device may maintain continuous generation of the second reward as the principal cryptocurrency of the first user is maintained in the exposure state.

The first reward and the second reward may be of the same type of cryptocurrency as the principal cryptocurrency. The amount of the second reward may be greater than the amount of the first reward. In detail, the generation rate of the second reward, which is an interest income generated according to the exposure state, may be greater than the generation rate of the first reward, which is an interest income generated according to the mining state. That is, the interest income rate in the exposure state may be greater than the interest income rate in the mining state.

FIG. 11 is a diagram for describing an interface for changing the state of a principal cryptocurrency, according to an embodiment.

For reference, as illustrated in FIG. 6, the game providing device may display an interface for changing the state of a cryptocurrency, through a display. As the operations to be performed after changing the state of the cryptocurrency to the mining state through the cryptocurrency deposit interface of FIG. 6 are described above with reference to FIGS. 7 and 8, operations to be performed after changing the state of the cryptocurrency to the exposure state through the cryptocurrency deposit interface of FIG. 6 will be described with reference to FIG. 11.

For reference, FIG. 11 illustrates an interface for providing a first reward when a winning condition is satisfied by a second user after the state of a cryptocurrency is changed to the exposure state. For convenience of description, the description of the situation in which the winning condition is satisfied by the second user is provided above with reference to FIG. 7, and thus, redundant drawings and descriptions will be omitted.

Referring to FIG. 11, when the winning condition is satisfied, the game providing device may display a winning condition achievement interface.

In an embodiment, the winning condition achievement interface may display information about the state of an obtainable principal cryptocurrency owned by an opponent, information about the amount of an obtainable principal cryptocurrency owned by the opponent, and an obtainable generated interest income. The winning condition achievement interface may include more or fewer components than those illustrated in FIG. 11.

FIG. 12 is a flowchart for describing a method of providing game content, according to an embodiment.

Referring to FIG. 12, in operation S1210, the game providing device may change the state of a principal cryptocurrency owned by a first user to the staking state, based on a user input.

The game providing device may receive an input from the first user. Based on the input from the first user, the game providing device may change the state of the principal cryptocurrency owned by the first user. The state of the principal cryptocurrency may include at least one of the mining state, the exposure state, the staking state, and the tradable state. For reference, descriptions with reference to FIG. 12 will focus on changing the state of the principal cryptocurrency to the staking state.

The staking state may refer to a state in which an interest income is generated as a cryptocurrency is deposited. Under the staking state, a third reward may be generated as an interest income. Under the staking state, other users may not have access to the principal cryptocurrency owned by the user and the third reward.

In operation S1220, the game providing device may provide the first user with the third reward under the staking state.

Although not illustrated, the game providing device may obtain a provision condition for providing the first user with an interest income generated according to the staking state.

The provision condition may be an arbitrarily set condition. For example, the game providing device may receive a provision request for obtaining an interest income according to an input from the first user. The provision condition may refer to reception of the provision request. This is only an example, and the technical spirit of the disclosure is not limited thereto.

The game providing device may provide the first user with the third reward under the staking state. The third reward may be an interest income generated as the principal cryptocurrency owned by the first user is deposited in the staking state. Under the staking state, the second user cannot access the principal cryptocurrency owned by the first user.

The second reward and the third reward may be of the same type of cryptocurrency as the principal cryptocurrency. The amount of the third reward may be less than the amount of the first reward. In detail, the generation rate of the third reward, which is an interest income generated according to the staking state, may be less than the generation rate of the first reward, which is an interest income generated according to the mining state. That is, the interest income rate in the staking state may be less than the interest income rate in the mining state.

FIG. 13 is a diagram for describing an interface for changing the state of a principal cryptocurrency, according to an embodiment.

For reference, as illustrated in FIG. 6, the game providing device may display an interface for changing the state of a cryptocurrency, through a display. As the operations to be performed after changing the state of the cryptocurrency to the mining state through the cryptocurrency deposit interface of FIG. 6 are described above with reference to FIGS. 7 and 8, operations to be performed after changing the state of the cryptocurrency to the staking state through the cryptocurrency deposit interface of FIG. 6 will be described with reference to FIG. 13.

For reference, FIG. 13 illustrates an interface for providing a first reward as an interest income after changing the state of the cryptocurrency to the staking state.

Referring to FIG. 13, when a set provision condition is satisfied, the game providing device may display an interest income provision interface.

In an embodiment, the interest income provision interface may display an obtainable generated interest income. The interest income provision interface may include more or fewer components than those illustrated in FIG. 13. For example, the interest income provision interface may further display information about the amount of the principal cryptocurrency.

FIG. 14 is a flowchart for describing a method of providing game content, according to an embodiment.

In operation S1410, the game providing device may change the state of a principal cryptocurrency owned by a first user to the tradable state, based on a user input.

The game providing device may receive an input from the first user. Based on the input from the first user, the game providing device may change the state of the principal cryptocurrency owned by the first user. The state of the principal cryptocurrency may include at least one of the mining state, the exposure state, the staking state, and the tradable state. For reference, descriptions with reference to FIG. 14 will focus on changing the state of the principal cryptocurrency to the tradable state.

For reference, the game providing device may change the state of the principal cryptocurrency to the tradable state through the interface for changing the state of a cryptocurrency illustrated in FIG. 6.

The tradable state may refer to a state in which an interest income is not generated as a cryptocurrency is locked. Under the tradable state, the game providing device may provide a system for trading a principal cryptocurrency locked by the first user with another user, for example, a second user. That is, the first user may receive goods equivalent to the selling price of locked principal cryptocurrency from the second user in return for providing the principal cryptocurrency to the second user.

In operation S1420, under the tradable state, the game providing device may receive a trade request for the principal cryptocurrency according to an input from the first user. The principal cryptocurrency may refer to a principal cryptocurrency owned by the first user.

For example, the game providing device may receive an input from the first user for selling the principal cryptocurrency owned by the first user. The game providing device may receive the trade request for the principal cryptocurrency according to the input from the first user.

Under the tradable state, the game providing device may receive a trade request for the principal cryptocurrency according to an input from the second user. The principal cryptocurrency may refer to a principal cryptocurrency owned by the first user.

For example, the game providing device may receive an input from the second user for purchasing the principal cryptocurrency owned by the first user. The game providing device may receive the trade request for the principal cryptocurrency according to the input from the second user.

In operation S1430, the game providing device may provide the second user with at least a part of the principal cryptocurrency from the first user, based on the trade request.

The game providing device may receive an input from the first user for selling the principal cryptocurrency owned by the first user. The game providing device may receive an input from the second user for purchasing the principal cryptocurrency owned by the first user. The game providing device may receive a trade request for trading the principal cryptocurrency owned by the first user, according to the input from the first user and the input from the second user.

Based on the trade request, the game providing device may trade at least a part of the principal cryptocurrency. For example, the game providing device may provide the second user with the principal cryptocurrency owned by the first user from the first user, and provide to the first user with goods equivalent to the selling price of the principal cryptocurrency from the second user in return for the principal cryptocurrency.

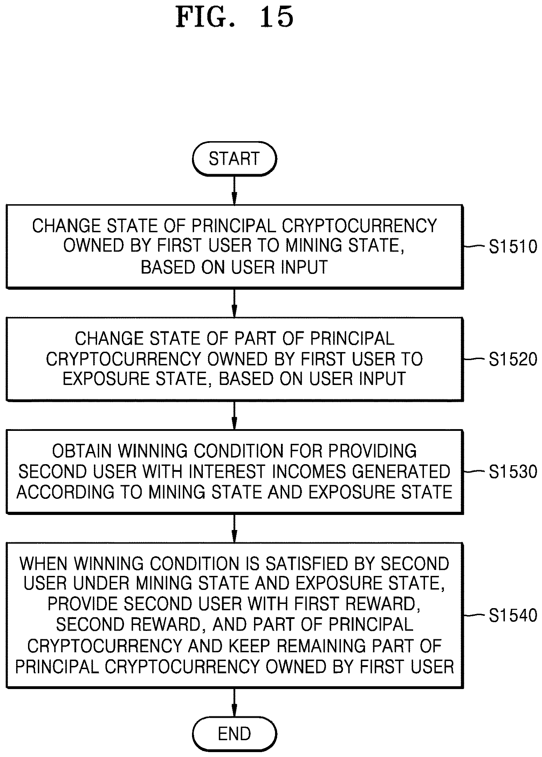

FIG. 15 is a flowchart for describing a method of providing game content, according to an embodiment.

In operation S1510, the game providing device may change the state of a principal cryptocurrency owned by a first user to a first state, based on a user input. The first state may be any one of the mining state, the exposure state, the staking state, and the tradable state.

In operation S1520, the game providing device may change the state of a part of the principal cryptocurrency owned by the first user to a second state, based on a user input. The second state may be any one of the mining state, the exposure state, the staking state, and the tradable state.

The second state may be different from the first state, but the technical spirit of the disclosure is not limited thereto. However, a case in which the first state and the second state are identical to each other is the same as the description provided above with reference to FIGS. 3 to 14, and thus, a case in which the first state and the second state are different from each other will be mainly described with reference to FIG. 15. In detail, an example in which the first state is the mining state and the second state is the exposure state will be described with reference to FIG. 15.

The game providing device may receive an input from the first user. Based on the input from the first user, the game providing device may change the state of the principal cryptocurrency owned by the first user to the exposure state.

Referring to operations S1510 and S1520, the game providing device may change the state of the principal cryptocurrency owned by the first user to the mining state based on a user input, and then change the state of a part of the principal cryptocurrency to the exposure state. That is, the state of a part of the principal cryptocurrency may be the mining state, and the state of another part of the principal cryptocurrency may be the exposure state.

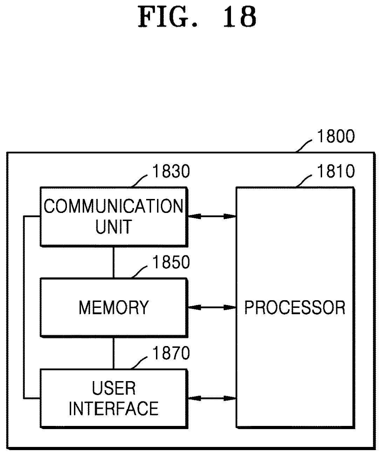

A plurality of states of the principal cryptocurrency may include at least one of the mining state, the exposure state, the staking state, and the tradable state. For reference, although FIG. 18 illustrates that the states of the principal cryptocurrency include the mining state and the exposure state, but this is only an example, and the technical spirit of the disclosure is not limited thereto.

The game providing device may generate a first reward as an interest income according to the mining state. The game providing device may generate the first reward based on the principal cryptocurrency deposited in the mining state among cryptocurrencies owned by the first user.

The game providing device may generate a second reward as an interest income according to the exposure state. The game providing device may generate the second reward based on the principal cryptocurrency deposited in the exposure state among the cryptocurrencies owned by the first user.

In operation S1530, the game providing device may obtain a winning condition for providing the second user with the interest incomes generated according to the mining state and the exposure state.

A winning condition for game content may vary depending on the type of a game provided. The description and a specific example of the winning condition are the same as those provided above with reference to FIG. 4, and thus, redundant descriptions will be omitted.

In operation S1540, when the winning condition is satisfied by the second user under the mining state and the exposure state, the game providing device may provide the second user with the first reward, the second reward, and a part of the principal cryptocurrency. When the winning condition is satisfied by the second user under the mining state and the exposure state, the game providing device may keep the remaining part of the principal cryptocurrency owned by the first user.

The game providing device may generate the first reward as a part of the principal cryptocurrency is deposited in the mining state. Here, when the winning condition is satisfied by the second user, the game providing device may provide the second user with the first reward, and keep the part of the principal cryptocurrency owned by the first user.

The game providing device may generate the second reward as the remaining part of the principal cryptocurrency is deposited in the exposure state. Here, when the winning condition is satisfied by the second user, the game providing device may provide the second user with the second reward and the remaining part of the principal cryptocurrency.

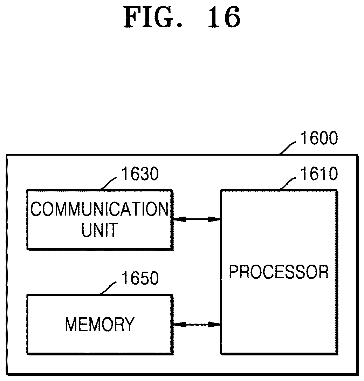

FIG. 16 is a diagram for describing a detailed configuration of a game providing device according to various embodiments.

As illustrated in FIG.16, a game providing device 1600 according to some embodiments may include at least one processor 1610, a communication unit 1630, and a memory 1650. However, not all of the components illustrated in FIG. 16 are essential components of the game providing device 1600. The game providing device 1600 may be implemented by more or fewer components than those illustrated in FIG. 16. The game providing device 1600 may be a user terminal, a server, a game network system, or a separate device.

According to an embodiment, the processor 1610 generally controls the overall operation of the game providing device 1600. For example, the processor 1610 may execute a program stored in the memory 1650 to control the overall operation of the communication unit 1630 and the memory 1650. The processor 1610 may control the operation of the game providing device 1600 in the specification by controlling the communication unit 1630 and the memory 1650.

According to an embodiment, the processor 1610 may change the state of a principal cryptocurrency owned by a first user to a first deposit state in which a first reward is generated as an interest income as the principal cryptocurrency is deposited, based on an input from the first user for changing the state of a cryptocurrency, obtain a winning condition for providing a second user with the generated interest income, and when the obtained winning condition is satisfied by the second user under the first deposit state, provide the second user with the generated first reward and keep the principal cryptocurrency owned by the first user.

According to an embodiment, the processor 1610 may be configured to change the state of the principal cryptocurrency owned by the first user to a second deposit state in which a second reward is generated as an interest income as the principal cryptocurrency is deposited, based on an input from the first user for changing the state of the cryptocurrency, and when the obtained winning condition is satisfied by the second user under the second deposit state, provide the second user with the generated second reward and the principal cryptocurrency.

According to an embodiment, the processor 1610 may be configured to change the state of the cryptocurrency owned by the first user to a third deposit state in which a third reward is generated as an interest income as the principal cryptocurrency is deposited, based on an input from the first user for changing the state of the cryptocurrency, and provide the first user with the generated third reward under the third deposit state.

According to an embodiment, the processor 1610 may be configured to change the state of the principal cryptocurrency owned by the first user to a tradable state in which the principal cryptocurrency is tradable with the second user, based on an input from the first user for changing the state of the cryptocurrency, receive a trade request for the principal cryptocurrency according to an input from the first user under the tradable state, and provide the second user with at least a part of the principal cryptocurrency from the first user, based on the trade request.

According to an embodiment, the processor 1610 may change the state of a part of the principal cryptocurrency to the second deposit state, and when the obtained winning condition is satisfied by the second user under the first deposit state and the second deposit state, provide the second user with the generated first reward, the generated second reward, and the part of the principal cryptocurrency, and keep the remaining part of the principal cryptocurrency owned by the first user.

According to an embodiment, when the obtained winning condition is not satisfied by the second user under the first deposit state, the processor 1610 may provide the first user with the generated first reward and keep the principal cryptocurrency owned by the first user.

According to an embodiment, the processor 1610 may be configured to receive, from the first user, a deposit request for depositing the principal cryptocurrency, transmit, to a blockchain network, a deposit transaction for depositing the principal cryptocurrency, transmit, to the blockchain network, a withdrawal transaction for withdrawing the first reward generated as the interest income as the principal cryptocurrency is deposited, and provide the second user with the withdrawn first reward.

According to an embodiment, the communication unit 1630 may perform communication with an external device under control by the processor 1610. For example, the communication unit 1630 may perform communication with an external device, such as a payment server or an authentication server, under control by the processor 1610. Also, the communication unit 1630 may obtain user information or a user input through communication with an external interface.

The memory 1650 may store a program for the processor 1610 to perform processing and control, and may store data input to or output from the game providing device 1600. According to an embodiment, the memory 1650 may store information about a user account and game-related information.

According to an embodiment, the processor 1610 may execute a method of depositing a cryptocurrency in a game, by using a program stored in the memory 1650.

According to an embodiment, the memory 1650 may include at least one of a flash memory-type storage medium, a hard disk-type storage medium, a multimedia card micro-type storage medium, a card-type memory (e.g., SD or XD memory), random-access memory (RAM), static RAM (SRAM), read-only memory (ROM), electrically erasable programmable ROM (EEPROM), programmable ROM (PROM), magnetic memory, a magnetic disk, and an optical disc. In addition, according to an embodiment, programs stored in the memory 1650 may be classified into a plurality of modules according to their functions.

According to an embodiment, the method of depositing a cryptocurrency in a game may be performed by the game providing device 1600, or may be performed by a server or a user terminal, and at least one component included in the game providing device 1600 may perform the embodiments described above with reference to FIGS. 1 to 15.

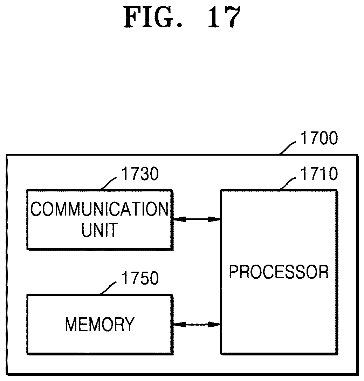

In addition, the method of depositing a cryptocurrency in a game may be performed by a server and a user terminal individually or together. Configurations of the server and the user terminal will be described in detail below with reference to FIGS. 17 and 18.

FIG. 17 is a diagram for describing a detailed configuration of a server according to various embodiments.

As illustrated in FIG. 17, a server 1700 according to some embodiments may include at least one processor 1710, a communication unit 1730, and a memory 1750. However, not all of the components illustrated in FIG. 17 are essential components of the server 1700. The server 1700 may be implemented by more or fewer components than those illustrated in FIG. 17.

According to an embodiment, the processor 1710 generally controls the overall operation of the server 1700. For example, the processor 1710 may execute a program stored in the memory 1750 to control the overall operation of the communication unit 1730 and the memory 1750. The processor 1710 may control the operation of the server 1700 in the specification by controlling the communication unit 1730 and the memory 1750.

According to an embodiment, the processor 1710 may change the state of a principal cryptocurrency owned by a first user to a first deposit state in which a first reward is generated as an interest income as the principal cryptocurrency is deposited, based on an input from the first user for changing the state of a cryptocurrency, obtain a winning condition for providing a second user with the generated interest income, and when the obtained winning condition is satisfied by the second user under the first deposit state, provide the second user with the generated first reward and keep the principal cryptocurrency owned by the first user.

According to an embodiment, the operation of the processor 1710 may correspond to the operation of the processor 1610 of the game providing device 1600 described above with reference to FIG. 16, and thus a detailed description thereof will be omitted.

The communication unit 1730 may provide a query to a user terminal 1800 and receive response information to the query, under control by the processor 1710. In addition, according to an embodiment, the communication unit 1730 may transmit and receive data to and from the user terminal 1800, and the data transmitted to and received from the user terminal 1800 may include control data for controlling the user terminal 1800 or a program included in the user terminal 1800.

The memory 1750 may store a program for the processor 1710 to perform processing and control, and may store data input to or output from the server 1700. According to an embodiment, the memory 1750 may store information about a user account and game-related information.

According to an embodiment, the processor 1710 may execute a method of depositing a cryptocurrency in a game, by using a program stored in the memory 1750.

According to an embodiment, the memory 1750 may include at least one of a flash memory-type storage medium, a hard disk-type storage medium, a multimedia card micro-type storage medium, a card-type memory (e.g., SD or XD memory), RAM, SRAM, ROM, EEPROM, PROM, magnetic memory, a magnetic disk, and an optical disc. In addition, according to an embodiment, programs stored in the memory 1750 may be classified into a plurality of modules according to their functions.

In addition, according to an embodiment, the method of depositing a cryptocurrency in a game may be performed by the server 1700 and the user terminal 1800 in a distributed manner, may be individually performed by the server 1700 and the user terminal 1800, or may be performed by the game providing device 1600.

FIG. 18 is a diagram for describing a detailed configuration of a user terminal according to various embodiments.

As illustrated in FIG. 18, the user terminal 1800 according to some embodiments may include at least one processor 1810, a communication unit 1830, a memory 1850, and a user interface 1870. However, not all of the components illustrated in FIG. 18 are essential components of the user terminal 1800. The user terminal 1800 may be implemented by more or fewer components than those illustrated in FIG. 18.

According to an embodiment, the processor 1810 generally controls the overall operation of the user terminal 1800. For example, the processor 1810 may execute a program stored in the memory 1850 to control the overall operation of the communication unit 1830, the memory 1850, and the user interface 1870. The processor 1810 may control the operation of the user terminal 1800 in the specification by controlling the communication unit 1830, the memory 1850, and the user interface 1870.

According to an embodiment, the processor 1810 may change the state of a principal cryptocurrency owned by a first user to a first deposit state in which a first reward is generated as an interest income as the principal cryptocurrency is deposited, based on an input from the first user for changing the state of a cryptocurrency, obtain a winning condition for providing a second user with the generated interest income, and when the obtained winning condition is satisfied by the second user under the first deposit state, provide the second user with the generated first reward and keep the principal cryptocurrency owned by the first user.

According to an embodiment, the operation of the processor 1810 may correspond to the operation of the processor 1610 of the game providing device 1600 described above with reference to FIG. 16, and thus a detailed description thereof will be omitted.

The communication unit 1830 may provide a query to the server 1700 and receive response information to the query, under control by the processor 1810. In addition, according to an embodiment, the communication unit 1830 may transmit and receive data to and from the server 1700, and the data transmitted to and received from the server 1700 may include control data for controlling the user terminal 1800 or a program included in the user terminal 1800.

According to an embodiment, the communication unit 1830 may include a Bluetooth communication unit, a BLE communication unit, an NFC unit, a wireless local area network (WLAN) (e.g., Wi-Fi) communication unit, a Zigbee communication unit, an Infrared Data Association (IrDA) communication unit, a Wi-Fi Direct (WFD) communication unit, an ultra-wideband (UWB) communication unit, an Ant+ communication unit, etc., but is not limited thereto.

In addition, according to an embodiment, the communication unit 1830 transmits and receives radio signals to and from at least one of a base station, an external terminal, and a server, over a mobile communication network. Here, the radio signals may include a voice call signal, a video call signal, or various types of data according to text/multimedia message transmission and reception.

The memory 1850 may store a program for the processor 1810 to perform processing and control, and may store data input to or output from the user terminal 1800. According to an embodiment, the memory 1850 may store information about a user account and game-related information.

According to an embodiment, the processor 1810 may execute a method of depositing a cryptocurrency in a game, by using a program stored in the memory 1850.

According to an embodiment, the memory 1850 may include at least one of a flash memory-type storage medium, a hard disk-type storage medium, a multimedia card micro-type storage medium, a card-type memory (e.g., SD or XD memory), RAM, SRAM, ROM, EEPROM, PROM, magnetic memory, a magnetic disk, and an optical disc. In addition, according to an embodiment, programs stored in the memory 1850 may be classified into a plurality of modules according to their functions.

According to an embodiment, the user interface 1870 may include various interfaces. For example, the user interface 1870 may include various interfaces, such as a key pad, a dome switch, a voice input interface, a fingerprint input interface, a touch input interface (e.g., a touch-type capacitive touch pad, a pressure-type resistive overlay touch pad, an infrared sensor-type touch pad, a surface acoustic wave conduction touch pad, an integration-type tension measurement touch pad, a piezoelectric effect-type touch pad, etc.), a camera, a jog wheel, or a jog switch, and may link various sensors, such as an acceleration sensor, a position sensor, a temperature sensor, or an optical sensor, to a user interface. The disclosure is not limited to the above examples.

In addition, according to an embodiment, the user interface 1870 may further include an output unit (not shown). The output unit may include at least one of a liquid-crystal display, a thin-film-transistor liquid-crystal display, an organic light-emitting diode, a flexible display, a three-dimensional (3D) display, and an electrophoretic display. In a case in which a display and a touch pad constitute a layer structure to form a touch screen, the display may serve as an input device in addition to an output device. In addition, the output unit (not shown) may include a light-emitting diode (LED) lamp, a vibration motor, a speaker, a flash, and the like, but is not limited thereto.

In addition, according to an embodiment, the user interface 1870 may output a notification of game information in the form of an image, a video, a sound, a vibration, a lamp, or the like.

According to an embodiment, the user interface 1870 may display an interface for depositing a principal cryptocurrency and receive a user input for receiving a request for depositing a cryptocurrency according to a mining state, an exposure state, and a staking state, through the interface. According to an embodiment, the user interface 1870 may display an interface for releasing deposit of the principal cryptocurrency, and receive a user input for receiving a request for changing the state of a cryptocurrency according to a tradable state, through the interface. According to an embodiment, the user interface 1870 may display an interface for confirming the deposit status of a cryptocurrency, and receive a user input for transmitting a withdrawal request and a trade request for the principal cryptocurrency, through the interface.

The devices described above may be implemented as a hardware component, a software component, and/or a combination of a hardware component and a software component. For example, the devices and components described in the embodiments may be implemented by using one or more general-purpose computers or special-purpose computers, such as a processor, a controller, an arithmetic logic unit (ALU), a digital signal processor, a microcomputer, a field-programmable gate array (FPGA), a programmable logic unit (PLU), a microprocessor, or any other device configured to execute and respond to instructions. The processor may execute an operating system (OS) and one or more software applications running on the operating system. The processor may also access, store, modify, process, and generate data in response to execution of software. Although some embodiments are described, for convenience of understanding, with reference to examples in which a single processor is used, those of skill in the art would understand that a processor may include a plurality of processing elements and/or a plurality of types of processing elements. For example, the processor may include one or more processors and one controller. In addition, other processing configurations are also possible, such as a parallel processor.

The software may include a computer program, code, instructions, or a combination of one or more thereof, and may configure the processor to operate as desired or may independently or collectively instruct the processor. Software and/or data may be embodied permanently or temporarily in any type of machine, component, physical or virtual equipment, computer storage medium or device, or in a propagated signal wave capable of providing instructions or data to or being interpreted by the processor. Software may be distributed on networked computer systems and stored or executed in a distributed manner. The software and data may be stored in one or more computer-readable recording media.

The method according to an embodiment may be embodied as program commands executable by various computer devices, and recorded on a computer-readable medium. The computer-readable medium may include program instructions, data files, data structures, or the like separately or in combinations. The program commands to be recorded on the medium may be specially designed and configured for an embodiment, or may be well-known to and be usable by those skilled in the art of computer software. Examples of the computer-readable recording medium include magnetic media such as hard disks, floppy disks, or magnetic tapes, optical media such as a compact disc ROM (CD-ROM) or a digital video disc (DVD), magneto-optical media such as a floptical disk, and hardware devices such as ROM, RAM, or flash memory, which are specially configured to store and execute program instructions. Examples of the program instructions include not only machine code, such as code made by a compiler, but also high-level language code that is executable by a computer by using an interpreter or the like. The hardware device may be configured to operate as one or more software modules to perform an operation of an embodiment, and vice versa.

Although the embodiments have been described with the limited embodiments and the drawings, various modifications and changes may be made by those of skill in the art from the above description. For example, the described techniques may be performed in a different order from the described method, and/or components of the described system, structure, device, circuit, etc. may be combined or integrated in a different form from the described method, or may be replaced or substituted by other components or equivalents to achieve appropriate results.

Therefore, other implementations or embodiments, and equivalents of the following claims are within the scope of the claims.

According to various embodiments, there may be provided a method of providing a variety of content for users to realize profits, by providing a staking-related process in combination with game content. Accordingly, it is possible for users to select game content for aggressive profit realization or safe profit realization. In addition, it is possible for users to freely trade cryptocurrencies therebetween when necessary.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope of the disclosure as defined by the following claims.

## Claims

1. A method of depositing a cryptocurrency in a game, the method comprising:
based on an input from a first user for changing a state of the cryptocurrency, changing a state of a principal cryptocurrency owned by the first user to a first deposit state in which a first reward is generated as an interest income as the principal cryptocurrency is deposited;
obtaining a winning condition for providing a second user with the generated interest income; and
based on the obtained winning condition being satisfied by the second user under the first deposit state, providing the second user with the generated first reward, and keeping the principal cryptocurrency owned by the first user.

2. The method of claim 1, wherein the cryptocurrency comprises a non-fungible token.

3. The method of claim 1, further comprising:
based on an input from the first user for changing the state of the cryptocurrency, changing the state of the principal cryptocurrency owned by the first user to a second deposit state in which a second reward is generated as an interest income as the principal cryptocurrency is deposited; and
based on the obtained winning condition being satisfied by the second user under the second deposit state, providing the second user with the generated second reward and the principal cryptocurrency.

4. The method of claim 3, wherein the first reward and the second reward are of a same type of cryptocurrency as the principal cryptocurrency, and
an amount of the second reward is greater than an amount of the first reward.

5. The method of claim 1, further comprising:
based on an input from the first user for changing the state of the cryptocurrency, changing the state of the principal cryptocurrency owned by the first user to a third deposit state in which a third reward is generated as an interest income as the principal cryptocurrency is deposited; and
under the third deposit state, providing the first user with the generated third reward.

6. The method of claim 5, wherein the first reward and the third reward are of a same type of cryptocurrency as the principal cryptocurrency, and
an amount of the third reward is less than an amount of the first reward.

7. The method of claim 1, further comprising:
based on an input from the first user for changing the state of the cryptocurrency, changing the state of the principal cryptocurrency owned by the first user to a tradable state in which the principal cryptocurrency is tradable with the second user;
under the tradable state, receiving a trade request for the principal cryptocurrency according to an input from the first user; and
based on the trade request, providing the second user from the first user with at least a part of the principal cryptocurrency.

8. The method of claim 1, wherein the first reward is of a same type of cryptocurrency as the principal cryptocurrency, and
an amount of the first reward is proportional to an amount of the principal cryptocurrency.

9. The method of claim 8, wherein the amount of the first reward is proportional to a period in which the principal cryptocurrency is deposited.

10. The method of claim 3, wherein the changing of the state of the principal cryptocurrency to the second deposit state comprises changing a state of a part of the principal cryptocurrency to the second deposit state, and
the method further comprises, based on the obtained winning condition being satisfied by the second user under the first deposit state and the second deposit state, providing the second user with the generated first reward, the generated second reward, and the part of the principal cryptocurrency, and keeping a remaining part of the principal cryptocurrency owned by the first user.

11. The method of claim 1, further comprising, based on the obtained winning condition being not satisfied by the second user under the first deposit state, providing the first user with the generated first reward, and keeping the principal cryptocurrency owned by the first user.

12. The method of claim 1, wherein the changing of the state of the principal cryptocurrency to the first deposit state comprises:
receiving, from the first user, a deposit request for depositing the principal cryptocurrency; and
transmitting, to a blockchain network, a deposit transaction for depositing the principal cryptocurrency, and
the providing of the first reward and the keeping of the principal cryptocurrency owned by the first user comprise:
transmitting, to the blockchain network, a withdrawal transaction for withdrawing the first reward as the interest income generated as the principal cryptocurrency is deposited; and
providing the second user with the withdrawn first reward.

13. A game providing device for providing a system for depositing a cryptocurrency in a game, the game providing device comprising:
a memory storing instructions; and
at least one processor functionally connected to the memory, wherein the at least one processor is configured to execute the instructions to, based on an input from a first user for changing a state of the cryptocurrency, change a state of a principal cryptocurrency owned by the first user to a first deposit state in which a first reward is generated as an interest income as the principal cryptocurrency is deposited, obtain a winning condition for providing a second user with the generated interest income, and based on the obtained winning condition being satisfied by the second user under the first deposit state, provide the second user with the generated first reward, and keep the principal cryptocurrency owned by the first user.

14. The game providing device of claim 13, wherein the cryptocurrency comprises a non-fungible token.

15. A computer-readable recording medium having recorded thereon a program for causing a computer to execute a method of providing a cryptocurrency deposit system, the method comprising:
based on an input from a first user for changing a state of a cryptocurrency, changing a state of a principal cryptocurrency owned by the first user to a first deposit state in which a first reward is generated as an interest income as the principal cryptocurrency is deposited;
obtaining a winning condition for providing a second user with the generated interest income; and
based on the obtained winning condition being satisfied by the second user under the first deposit state, providing the second user with the generated first reward, and keeping the principal cryptocurrency owned by the first user.
